# EUROPEAN PATENT SPECIFICATION

(11) **EP 3 411 684 B1**
(45) Date of publication and mention of the grant of the patent: **01.04.2020**
(21) Application number: 16703564.1
(22) Date of filing: 01.02.2016
(51) Int. Cl.: G01L 9/00, G01L 23/08, G01D 5/244, G01M 15/08

(54) **PRESSURE MONITORING ARRANGEMENT AND METHOD**
DRUCKÜBERWACHUNGSANORDNUNG UND -VERFAHREN
MONTAGE ET PROCÉDÉ DE SURVEILLANCE DE PRESSION

(43) Date of publication of application: 12.12.2018
(73) Proprietor: Wärtsilä Finland Oy, 65100 Vaasa (FI)
(72) Inventor: RIIKI, Tomi, 65100 Vaasa (FI); JANHONEN, Teemu, 65100 Vaasa (FI)
(74) Representative: Berggren Oy, Helsinki & Oulu
(86) International application number: PCT/FI2016/050058
(87) International publication number: WO 2017/134329

(56) References cited:
- WO-A1-2014/197760
- WO-A1-2015/023835
- US-A1- 2009 151 438

## Description

### Technical field of the invention

The present invention relates to a pressure monitoring arrangement for monitoring cylinder pressure of a piston engine in accordance with the preamble of claim 1. The invention also concerns a method for monitoring pressure in a cylinder of a piston engine as defined in the preamble of the other independent claim.

### Background of the invention

Cylinder pressures of piston engines are typically monitored using pressure sensors. Each cylinder of an engine needs an own pressure sensor. To be able to measure the pressure inside a cylinder, the pressure sensor needs to be in fluid communication with the combustion chamber. Because of the high pressures and temperatures in the combustion chambers, the pressure sensors need to be very robust. High standards are also set for the sealing of the pressure sensors. For the above mentioned reasons, the use of pressure sensors is relatively expensive. There is thus a need for reliable non-contact monitoring of cylinder pressures.

WO 2015/023835 A1 discloses a cylinder pressure sensor using a encoder to monitor displacement of the piston shaft.

### Summary of the invention

An object of the present invention is to provide an improved pressure monitoring arrangement for monitoring cylinder pressure of a piston engine. The characterizing features of the arrangement according to the invention are given in the characterizing part of claim 1. Another object of the invention is to provide an improved method for monitoring pressure in a cylinder of a piston engine. The characterizing features of the method according to the invention are given in the characterizing part of the other independent claim.

The arrangement according to the invention comprises a linear encoder comprising a read head and a scale and being configured to monitor displacement of a component of the piston engine for determining cylinder pressure on the basis of a measured displacement or deformation value.

The method according to the invention comprises the steps of monitoring displacement of a component of the engine using a linear encoder and determining the pressure on the basis of the measured displacement.

With the arrangement and method according to the invention, the cylinder pressures of a piston engine can be monitored without exposing a sensor to combustion gases. Linear encoders are relatively inexpensive and widely available from various manufacturers. Many linear encoders provide a digital output and the encoders are thus easy to integrate to a control system of the engine.

According to an embodiment of the invention, the encoder is a quadrature incremental encoder. A quadrature encoder allows determination of the direction of motion. The encoder can be, for instance, a magnetic encoder. A magnetic encoder is reliable in the conditions of an engine, since it is not sensitive to dirt. Magnetic encoders also have smaller jitter compared to for example inductive encoders.

According to an embodiment of the invention, the encoder is arranged to monitor longitudinal displacement of a cylinder liner in relation to an engine block. According to tests, the correlation between cylinder pressure and the displacement of a cylinder liner is high. The encoder can monitor the displacement of the cylinder liner at a crankshaft end of the cylinder liner. The encoder is easier to assemble to the lower end of the cylinder liner.

According to another embodiment of the invention, the encoder is arranged to monitor displacement of a cylinder head in relation to an engine block.

According to another embodiment of the invention, the encoder is arranged to monitor the length of the circumference of a cylinder liner. The encoder can be arranged at a cylinder head end of the cylinder liner. This allows monitoring of the cylinder pressure at top dead center.

The scale of the encoder can be arranged on an outer surface of the cylinder liner such that increasing cylinder liner diameter moves the scale in relation to the read head.

### Brief description of the drawings

Embodiments of the invention are described below in more detail with reference to the accompanying drawings, in which
Fig. 1 shows schematically an engine comprising a pressure monitoring arrangement according to the invention,
Fig. 2 shows schematically a cylinder of a piston engine with a pressure monitoring arrangement according to an embodiment of the invention, and
Fig. 3 shows schematically a cross-sectional view of a cylinder liner with a pressure monitoring arrangement according to an example not falling within the scope of the appended claims.

### Description of embodiments of the invention

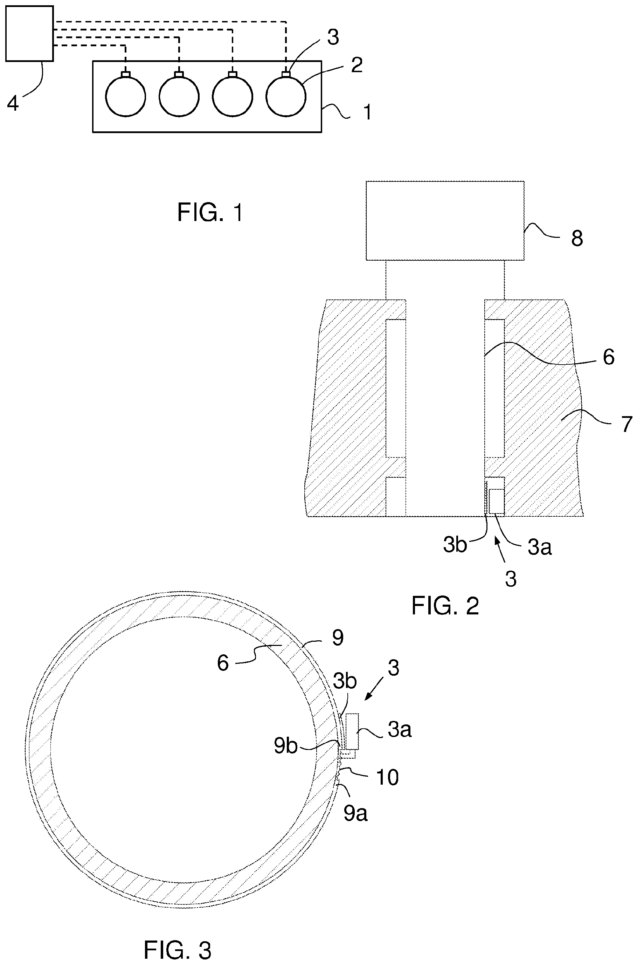

In figure 1 is shown schematically a piston engine 1. The engine 1 is a large internal combustion engine, such as a main or an auxiliary engine of a ship or an engine that is used at a power plant for producing electricity. The rated power of the engine 1 is at least 150 kW/cylinder and the cylinder bore is at least 150 mm. The engine 1 comprises a plurality of cylinders 2. In figure 1, four cylinders 2 are shown, but the engine 1 can comprise any reasonable number of cylinders 2, which can be arranged, for instance, in line or in a V-configuration. The engine 1 comprises a pressure monitoring system for monitoring cylinder pressures in the cylinders 2 of the engine 1. The cylinder pressures are not measured directly, but the pressure monitoring system comprises linear encoders 3, which are used for determining the cylinder pressures. Each cylinder 2 of the engine 1 is provided with an own linear encoder 3. Each linear encoder 3 is configured to monitor displacement of a component of the engine 1 for determining cylinder pressure in one of the cylinders 2 of the engine 1. The linear encoders 3 are connected to a control unit 4. The control unit 4 is used for determining the cylinder pressure in each cylinder 2 of the engine 1 on the basis of the measurements done by the linear encoders 3. With the linear encoders 3, the cylinder pressures can be determined in a non-contact manner. The linear encoders 3 can be arranged outside the cylinders 2 such that they are not be exposed to combustion gases.

The linear encoders 3 used in the pressure monitoring system can be based on many different alternative operating principles. The linear encoder 3 can be, for instance, a magnetic, inductive, capacitive or optical encoder or its operation can be based on eddy current. An advantage of magnetic encoders is that they are not sensitive to dirt and function therefore reliably in an engine environment. The encoders 3 can be either incremental or absolute encoders. Since absolute positions do not need to be known, incremental encoders are sufficient. The encoders 3 are preferably quadrature encoders. A quadrature encoder produces two signals with a 90 degree phase difference, which allows determination of the direction of motion. An incremental quadrature encoder is provided with two read heads, which are positioned in relation to a scale of the encoder so that the read heads produce signals with a 90° phase shift in relation to each other. The encoders 3 can produce analog signals, which are converted into digital signals internally within the encoders 3.

In figure 2 is shown a pressure monitoring arrangement according to an embodiment of the invention. The pressure monitoring arrangement is used for monitoring pressure in one cylinder 2 of the engine 1. Each cylinder 2 of the engine 1 is provided with a similar arrangement. Figure 2 shows schematically a cylinder liner 6, a cylinder head 8 and part of an engine block 7. The cylinder liner 6 is arranged partly inside the engine block 7. The cylinder head 8 is arranged at the upper end of the cylinder liner 6 for closing the upper end of the cylinder 2. The cylinder liner 6 and the cylinder head 8 together define a combustion chamber. In the embodiment of figure 2, a linear encoder 3 is configured to monitor displacement of the cylinder liner 6 in relation to the engine block 7. The linear encoder 3 comprises a read head 3a and a scale 3b. The expression "read head" refers here also to a sensor of a quadrature encoder, which actually comprises two read heads integrated in a sensor unit. The scale 3b is attached to an outer surface of the cylinder liner 6. In case of an inductive encoder, the scale 3b can consist of grooves that are made directly to an outer surface of the cylinder liner 6. In a scale of a magnetic encoder, areas with opposite field directions alternate.

The read head 3a is attached to the engine block 7. The read head 3a can monitor the movements of the scale 3b and can thus determine the displacement of the cylinder liner 6 in relation to the engine block 7. No mechanical contact between the scale 3b and the read head 3a is needed. The linear encoder 3 is connected to a control unit (not shown in figure 2), where the displacement values are converted into pressure values. The correlation between the displacement of the cylinder liner 6 and the cylinder pressure can be determined for example experimentally. According to tests, the displacement of a cylinder liner 6 has a high correlation with the cylinder pressure. The pressure monitoring arrangement of figure 2 thus provides a reliable non-contact method for monitoring cylinder pressures. In the embodiment of figure 2, the linear encoder 3 is arranged at the lower end, i.e. a crankshaft end of the cylinder liner 6. The linear encoder 3 is easier to arrange at the lower end of the cylinder liner 6 and the temperatures are lower. However, the linear encoder 3 could also be arranged at some other location.

In the embodiment of figure 2, the displacement of the cylinder liner 6 is monitored. However, the linear encoder 3 could also be configured to monitor displacement of the cylinder head 8 in relation to the engine block 7 could be monitored.

Figure 3 shows a pressure monitoring arrangement according to an example not falling within the scope of the appended claims. In this example, deformation of a cylinder liner 6 is monitored instead of displacement of the cylinder liner 6. A linear encoder 3 is arranged to monitor the length of the circumference of the cylinder liner 6. A band 9 is arranged around the cylinder liner 6. The band 9 has a first end 9a and a second end 9b. The first end 9a of the band 9 is fixed to the cylinder liner 6. The linear encoder 3 comprises a read head 3a and a scale 3b. The linear encoder 3 can be similar to the encoder 3 used in the embodiment of figure 2. The scale 3b is attached to the second end 9b of the band 9. The scale 3b thus moves together with the band 9. The read head 3a is attached to the cylinder liner 6. A resilient member 10 is attached to the second end 9b of the band 9 and configured to pull the second end 9b towards the first end 9a of the band 9. The resilient member 10 can be, for instance, a spring or a strip of elastic material. In the example of figure 3, one end of the resilient member 10 is attached to the first end 9a of the band 9. However, the resilient member 10 could also be attached to the cylinder liner 6.

The read head 3a of the linear encoder 3 monitors the position of the scale 3b. As the diameter of the cylinder liner 6 increases due to increased cylinder pressure, the circumferential length of the cylinder liner 6 increases. Since the first end 9a of the band 9 is attached to the cylinder liner 6, the expansion of the cylinder liner 6 moves the second end 9b of the band 9 away from the first end 9a. The scale 3b of the encoder 3 moves together with the band 9 and the movement is detected by the read head 3a. As the cylinder pressure drops, the circumferential length of the cylinder liner 6 decreases and the force of the resilient member 10 moves the second end 9b of the band 9 again towards the first end 9a of the band 9. On the basis of the monitoring of the position of the scale 3b in relation to the read head 3a, the cylinder pressure can be determined in a control unit (not shown in figure 3). The relation between the circumferential length of the cylinder liner 6 and the cylinder pressure can be determined, for instance, experimentally. Compared to the embodiment where displacement of a cylinder liner 6 is monitored, an advantage of this example is that the movement of neighboring cylinder liners 6 does not disturb the monitoring. Compared to a solution where deformation of a cylinder liner 6 is monitored using a strain gage extending over a small portion of the perimeter of the cylinder liner 6, better resolution can be achieved in this example, since the length of the whole perimeter of the cylinder liner 6 is measured. The resilient member 10 is not a necessary element, but the band 9 can be pretensioned such that the shape of the band 9 follows changes in the diameter of the cylinder liner 6.

The band 9 and the linear encoder 3 are preferably arranged close to the cylinder head end of the cylinder liner 6 to allow pressure monitoring also when the piston is at a top dead center position.

## Claims

1. A pressure monitoring arrangement for monitoring cylinder pressure of a piston engine (1), the arrangement comprising a linear encoder (3) comprising a read head (3a) and a scale (3b) and being configured to monitor displacement of a component (6, 8) of the piston engine (1) for determining cylinder pressure on the basis of a measured displacement value, **characterized in that** the encoder (3) is arranged to monitor displacement of a cylinder liner (6) or a cylinder head (8) in relation to an engine block (7).

2. A pressure monitoring arrangement according to claim 1, wherein the encoder (3) is a quadrature incremental encoder.

3. A pressure monitoring arrangement according to claim 1 or 2, wherein the encoder (3) is a magnetic encoder.

4. A pressure monitoring arrangement according to any of the preceding claim, wherein the encoder (3) is arranged to monitor the displacement of the cylinder liner (6) at a crankshaft end of the cylinder liner (6).

5. A method for monitoring pressure in a cylinder (2) of a piston engine (1), **characterized in that** the cylinder pressure is monitored by means of a pressure monitoring arrangement according to any of the preceding claims.

## Patentansprüche

1. Drucküberwachungsanordnung zum Überwachen des Zylinderdrucks eines Kolbenmotors (1), wobei die Anordnung einen Linear-Encoder (3) umfasst, der einen Lesekopf (3a) und eine Skala (3b) umfasst und konfiguriert ist, um die Verschiebung einer Komponente (6, 8) des Kolbenmotors (1) zum Bestimmen des Zylinderdrucks auf der Grundlage eines gemessenen Verschiebungswerts zu überwachen, **dadurch gekennzeichnet, dass** der Encoder (3) angeordnet ist, um die Verschiebung einer Zylinderlaufbuchse (6) oder eines Zylinderkopfs (8) in Bezug auf einen Motorblock (7) zu überwachen.

2. Drucküberwachungsanordnung nach Anspruch 1, wobei der Encoder (3) ein Quadratur-Inkremental-Encoder ist.

3. Drucküberwachungsanordnung nach Anspruch 1 oder 2, wobei der Encoder (3) ein magnetischer Encoder ist.

4. Drucküberwachungsanordnung nach einem der vorhergehenden Ansprüche, wobei der Encoder (3) angeordnet ist, um die Verschiebung der Zylinderlaufbuchse (6) an einem Kurbelwellenende der Zylinderlaufbuchse (6) zu überwachen.

5. Verfahren zum Überwachen des Drucks in einem Zylinder (2) eines Kolbenmotors (1), **dadurch gekennzeichnet, dass** der Zylinderdruck mittels einer Drucküberwachungsanordnung nach einem der vorhergehenden Ansprüche überwacht wird.

## Revendications

1. Dispositif de surveillance de la pression pour la surveillance d'une pression de cylindre d'un moteur à piston (1), le dispositif comprenant un codeur linéaire (3) comprenant une tête arrière (3a) et une échelle (3b), tout en étant configuré pour surveiller le déplacement d'un composant (6, 8) du moteur à piston (1) pour déterminer une pression de cylindre sur la base d'une valeur de déplacement mesurée, **caractérisé en ce que** le codeur (3) est conçu pour surveiller le déplacement d'une chemise de cylindre (6) ou d'une tête de cylindre (8) par rapport à un bloc-moteur (7).

2. Dispositif de surveillance de la pression selon la revendication 1, dans lequel le codeur (3) est un codeur incrémental en quadrature.

3. Dispositif de surveillance de la pression selon la revendication 1 ou 2, dans lequel le codeur (3) est un codeur magnétique.

4. Dispositif de surveillance de la pression selon l'une quelconque des revendications précédentes, dans lequel le codeur (3) est conçu pour surveiller le déplacement de la chemise de cylindre (6) au niveau d'une extrémité de vilebrequin de la chemise de cylindre (6).

5. Procédé de surveillance de la pression dans un cylindre (2) d'un moteur à piston (1), **caractérisé en ce que** la pression de cylindre est surveillée à l'aide d'un Dispositif de surveillance de la pression selon l'une quelconque des revendications précédentes.
